# EUROPÄISCHE PATENTANMELDUNG

(11) **EP 1 059 250 A1**
(43) Veröffentlichungstag der Anmeldung: **13.12.2000**
(21) Anmeldenummer: 00109936.5
(22) Anmeldetag: 11.05.2000
(51) Int. Cl.: B65G 53/56

(54) **Schüttgutweiche**

(30) Priorität: 02.06.1999 DE 19925346; 25.02.2000 DE 10015066
(71) Anmelder: Waeschle GmbH, 88250 Weingarten (DE)
(72) Erfinder: Hemmelmann, Klaus, 88636 Illmensee (DE); Huber, Werner, 38116 Braunschweig (DE)
(74) Vertreter: Hemmelmann, Klaus

(57) **Zusammenfassung**

Eine Schüttgutweiche umfaßt ein Gehäuse (1) mit einem Eingangsanschluß (4) und mindestens zwei Abgangsanschlüssen (5), (6), die mittels eines in einer Gehäuseausnehmung (10) drehbar angeordneten Kükens (11) wahlweise mit dem Eingangsanschluß (4) verbindbar sind. Die zur Drehung des Kükens benötigte Antriebskraft ist durch Wirkung eines Druckfluids auf einen Kolben herbeiführbar. Der Kolben ist dabei als innerhalb der Gehäuseausnehmung (10) angeordneter Drehkolben (15) ausgebildet. Das Küken ist dabei nach einer besonderen Ausführung der Erfindung unter der Wirkung des Druckfluids axial verschiebbar und von einer Einrichtung zur drehfesten Fixierung des Kükens abhebbar.

## Beschreibung

Die Erfindung betrifft eine Schüttgutweiche, umfassend ein Gehäuse mit einem Eingangsanschluß und mindestens zwei Abgangsanschlüssen, die mittels eines in einer Gehäuseausnehmung drehbar angeordneten Kükens wahlweise mit dem Eingangsanschluß verbindbar sind, wobei die zur Drehung des Kükens benötigte Antriebskraft durch Wirkung eines Druckfluids auf einen Kolben herbeiführbar ist.

Eine gattungsgemäße Schüttgutweiche ist aus der Druckschrift DE-GM 91 04 817 bekannt. Das Gehäuse der Weiche umfaßt einen Grundkörper mit aufgesetzten Seitendeckeln, die eine Gehäuseausnehmung begrenzen, in der ein zylinderförmiges Küken drehbar angeordnet ist. Das Küken ist mit zwei parallelen, die Mantelfläche des Zylinders durchbrechenden Durchgangskanälen versehen, die je nach Drehstellung des Küken den Eingangsanschluß mit einem der beiden Abgangsanschlüsse verbinden.

Die Antriebskraft zum Verstellen des Kükens wird durch einen außen an einem Seitendeckel angeflanschten, pneumatischen Antrieb erzeugt. Der in zwei Richtungen wirksame Kolben des Antriebs wird bei Beaufschlagung mit einem Druckfluid linear verschoben. Die Linearbewegung wird mittels einer Kolbenstange in eine auf dem Deckel befindliche Kammer übertragen und dort über einen mit der Achse des Kükens drehfest verbundenen Hebel in eine Drehbewegung umgesetzt.

Diese Anordnung weist den Vorteil auf, daß keine beweglichen Teile freiliegen und die Seitendeckel zu Reinigungszwecken schnell und einfach entfernt werden können. Diese Vorzüge sind allerdings mit einem relativ großen konstruktiven Aufwand verbunden, ferner baut die Vorrichtung verhältnismäßig groß.

Weitere Schüttgutweichen, bei denen ein pneumatischer Antrieb auf der Außenseite des Grundkörpers angeordnet ist, werden in den Druckschriften DE 31 02 384 C2 und DE 40 04 388 A1 offenbart. Im ersten Fall werden die Drehkräfte durch zwei Hebel erzeugt, die an beiden Enden der Achse des Kükens befestigt sind und die Seitendeckel außen umgreifen. In der anderen Ausführung ist eine gelenkige Verbindung der Kolbenstange mit einem Steg vorgesehen, der in einer Aussparung des Kükens angeordnet ist.

Nachteilhaft sind in beiden Fällen erneut die Sperrigkeit und der große bauliche Aufwand.

Aus der Offenlegungsschrift DE 29 47 953 A1 ist darüber hinaus bekannt, die Linearbewegung des pneumatischen Antriebs mittels Zahnstange und Ritzel in eine Drehbewegung des Kükens zu überführen, wodurch ein von der Drehstellung des Kükens unabhängiges Drehmoment erzeugt werden kann. Die Konstruktion ist jedoch sehr aufwendig und weist einen verschlechterten Wirkungsgrad auf.

### Aufgabe

Der vorliegenden Erfindung liegt die Aufgabe zugrunde, eine klein bauende Schüttgutweiche mit einem einfachen und betriebssicheren Antrieb bereitzustellen.

### Lösung

Die Aufgabe wird erfindungsgemäß dadurch gelöst, daß der Kolben als innerhalb der Gehäuseausnehmung angeordneter Drehkolben ausgebildet ist.

Bevorzugte Ausführungsformen der Erfindung werden in den Unteransprüchen beansprucht.

### Figuren

Die Figuren stellen beispielhaft und schematisch verschiedene Ausführungen der Erfindung dar.

Es zeigen:
- Fig. 1: einen Querschnitt durch eine erfindungsgemäße Schüttgutweiche
- Fig. 2: einen Längsschnitt durch die Schüttgutweiche nach Fig. 1 entlang der Schnittebene A-A in einer ersten Funktionsstellung
- Fig. 3: den Längsschnitt nach Fig. 2 in einer anderen Funktionsstellung
- Fig. 4: einen Querschnitt durch eine weitere erfindungsgemäße Schüttgutweiche
- Fig. 5: einen Längsschnitt durch die Schüttgutweiche nach Fig. 4 entlang der Schnittebene A-A in einer ersten Funktionsstellung
- Fig. 6: den Längsschnitt nach Fig. 5 in einer anderen Funktionsstellung
- Fig. 7: einen Querschnitt durch eine erfindungsgemäße Schüttgutweiche nach Anspruch 9
- Fig. 8: einen Querschnitt durch eine Schüttgutweiche nach Anspruch 10

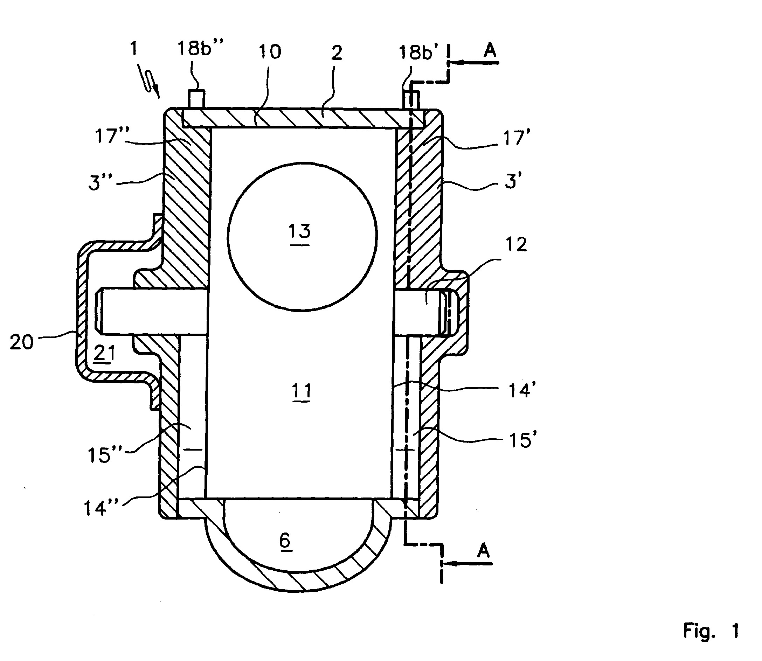

Die in den Figuren 1 bis 3 dargestellte Schüttgutweiche umfaßt ein Gehäuse 1 aus einem Grundkörper 2 und Seitendeckeln 3. Der Grundkörper 2 bildet einen Eingangsanschluß 4, einen ersten, mit dem Eingangsanschluß 4 achsgleichen Abgangsanschluß 5 sowie einen winklig abzweigenden zweiten Abgangsanschluß 6 aus, die jeweils mit kreisrunden Flanschen 7, 8, 9 versehen sind. Der Grundkörper 2 und die Seitendeckel 3 umschließen eine zylinderförmige Gehäuseausnehmung 10, in der ein Küken 11 mit ebenfalls zylinderförmiger Gestalt über eine Achse 12 drehbar gelagert ist.

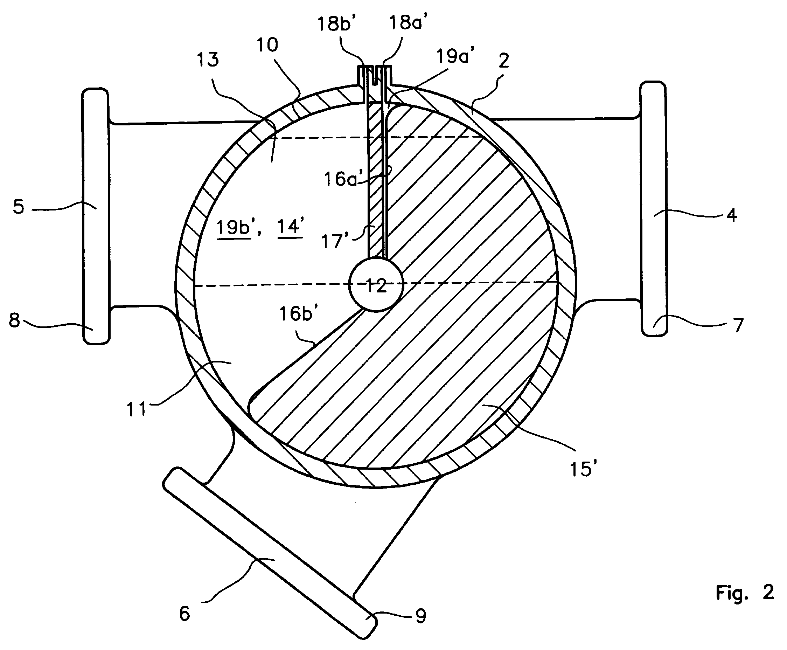

Das Küken 11 ist mit einen Durchgangskanal 13 versehen, der einen kreisförmigen Querschnitt aufweist und in der in Fig. 1 und 2 abgebildeten ersten Funktionsstellung des Kükens 11 den Eingangsanschluß 4 mit dem ersten, achsgleichen Abgangsanschluß 5 verbindet, wobei der zweite Abgangsanschluß 6 von der Mantelfläche des Kükens 11 verschlossen wird.

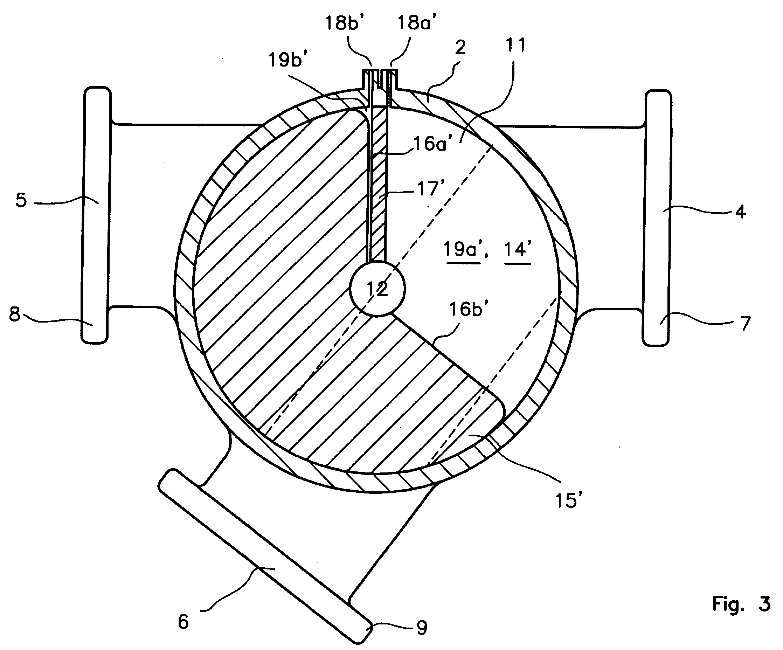

Durch Drehung des Kükens 11 im Uhrzeigersinn um einen Winkel von etwa 130° gemäß Figur 3 wird der Durchgangskanal 13 in Überdeckung mit dem Eingangsanschluß 4 und dem zweiten, winklig abzweigenden Abgangsanschluß 6 gebracht. Dabei wird der erste Abgangsanschluß 5 dichtend verschlossen. Eine Drehung gegen den Uhrzeigersinn überführt das Küken 11 wieder in die Ausgangsstellung.

Innerhalb der Gehäuseausnehmung 10 ist zwischen den Seitendeckeln 3', 3'' und den beiden Stirnflächen 14', 14'' des Kükens 11 je ein in beiden Drehrichtungen wirksamer Drehkolben 15', 15'' angeordnet. Die Drehkolben 15', 15'' liegen in den Funktionsstellungen des Kükens 11 jeweils mit einer Wirkfläche 16 an einem von der Gehäuseausnehmung 10 radial zur Achse 12 ragenden Steg 17 an.

Die Stege 17 sind als Teil der Seitendeckel 3 ausgebildet, um eine Demontage des Kükens 11 nach dem Entfernen der Seitendeckel 3 zu ermöglichen, während die Drehkolben 15 einstückig mit dem Küken 11 verbunden sind.

Über die Zuführöffnung 18a' kann dem Druckraum 19a' zwischen Drehkolben 15' und dem Steg 17' mittels einer nicht dargestellten Ventilanordnung ein Druckfluid zugeführt werden, das eine Druckkraft auf die Wirkfläche 16a' ausgeübt, welche das Küken 11 im Uhrzeigersinn in Drehung versetzt. Das Küken 11 dreht sich dabei von der Funktionsstellung nach Figur 1 und 2 in die Funktionsstellung nach Figur 3. Der Druckraum 19b' wird gleichzeitig über die Zuführöffnung 18b' entlüftet, wobei die Drehbewegung des Küken 11 durch Steuerung des austretenden Fluidstroms beeinflußbar ist. Entsprechendes gilt für die gegenüberliegenden Druckräume 19a'' und 19b''.

Die gleiche Drehbewegung kann alternativ durch Anlegen eines Unterdrucks an die Zuführöffnung 18b' bei gleichzeitiger Belüftung des Druckraums 19a' über die Zuführöffnung 18a' herbeigeführt werden.

Die Druckräume 19 werden im Ausführungsbeispiel axial durch die inneren Wandungen der Seitendeckel 3 und die Stirnflächen 14 des Kükens 11 räumlich begrenzt. Die radiale Begrenzung erfolgt über die Wirkflächen 16 der Drehkolben 15, die Stege 17, die Achse 12 sowie die radial innenliegende Wandungen des Gehäuses 1.

Das Zurückdrehen des Kükens 11 in die Ausgangsstellung wird sinngemäß durch Umkehr der Druckverhältnisse vorgenommen.

Als Druckfluid wird bevorzugt ein Druckgas, beispielsweise Druckluft verwendet. Grundsätzlich ist jedoch auch eine Druckflüssigkeit einsetzbar.

Die Welle 12 ist einseitig aus dem Seitendeckel 3'' herausgeführt und endet in einer von einer Haube 20 verschlossenen Kammer 21. In dieser Kammer 21 können beispielsweise nicht dargestellte Endlagendämpfer oder Stellungssensoren staubdicht untergebracht werden. Es ist jedoch grundsätzlich möglich, diese auch innerhalb der Gehäuseausnehmung 10 anzuordnen.

Die Druckkräfte des Druckfluids wirken selbstverständlich nicht nur auf die Wirkflächen 16 der Drehkolben 15, sondern auch auf die Seitendeckel 3, die Stege 17 und die Stirnflächen 14 des Kükens 11. Die Seitendeckel 3 und die Stege 17 sind so zu dimensionieren, daß sie dem Fluiddruck ohne unzulässig hohe Verformung standhalten können. Eine axiale Verschiebung durch die auf die Stirnflächen 14 des Kükens 11 wirkenden Druckkräfte tritt nicht auf, da sich die Verschiebekräfte durch die beiderseits des Kükens 11 angeordneten Druckräume 19 aufheben.

Die Spalte zwischen den Drehkolben 15 und den Seitendeckeln 3 sowie zwischen den Stegen 17 und den Stirnflächen 14 können beispielsweise mittels aufblasbarer Dichtungen in den Funktionsstellungen vollständig und beim Schaltvorgang unter Reduzierung des Aufblasdrucks weitgehend abgedichtet werden. Bei ausreichend engen Spaltweiten kann jedoch gegebenenfalls auf eine gesonderte Abdichtung, insbesondere im Bereich der Drehkolben 15 verzichtet werden. Das über die Spalte austretende Druckfluid spült in diesem Fall den Raum zwischen Gehäuseausnehmung 10 und Küken 11 und verhindert das Eintreten von Partikeln aus dem Schüttgutstrom.

Es ist selbstverständlich möglich, den Antrieb nur einseitig am Küken 11 anzuordnen. In diesem Fall muß die Verschiebekraft durch eine Axiallagerung der Achse 12 aufgefangen werden. Gleiches kann für Küken mit einer von der Zylinderform abweichenden Gestalt sowie für den Fall gelten, das auf jeder Stirnfläche 14 des Kükens 11 jeweils ein einfach wirkender Drehkolben 15 angeordnet ist.

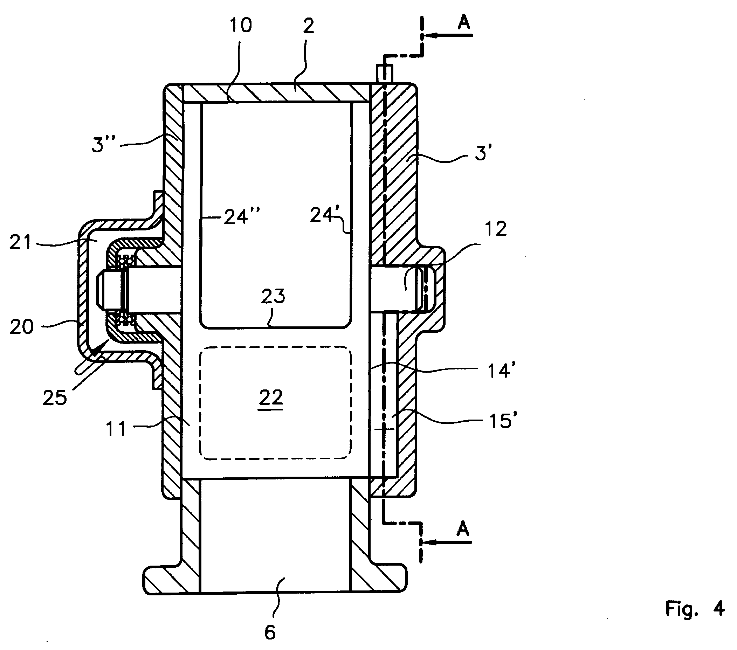

In den Figuren 4 bis 6 ist eine andere Ausführung der Erfindung dargestellt, bei der axial Verschiebekräfte auftreten.

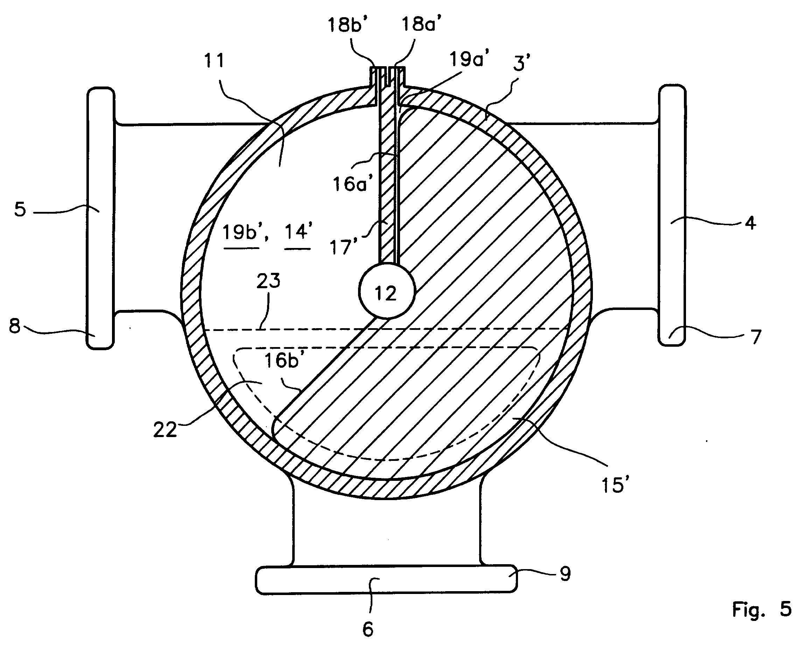

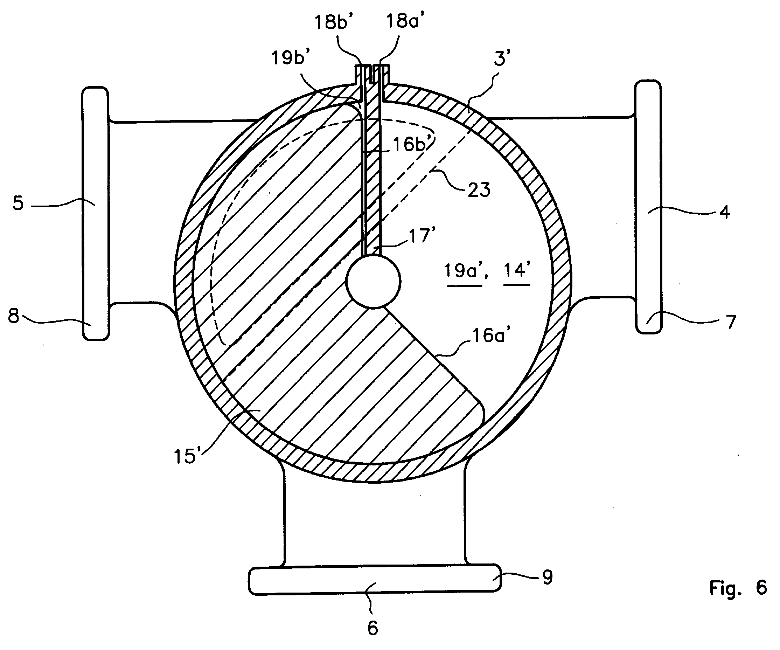

Das Küken 11 umfaßt einen Zylinderabschnitt 22 mit einer ebene Leitfläche 23 und zwei Seitenscheiben 24. Durch Drehung des Kükens 11 um die Achse 12 lenkt die Leitfläche 23 den über den Eingangsanschluß 4 zugeführten Schüttgutstrom wahlweise zum Abgangsanschluß 5, wie in Figur 5 gezeigt, oder zum Abgangsanschluß 6, gemäß Figur 6.

Innerhalb der Gehäuseausnehmung 10 ist einseitig zwischen dem Seitendeckeln 3' und der Seitenscheiben 24' ein doppelt wirkender Drehkolben 15' mit zwei Wirkflächen 16a', 16b' angeordnet. Der Wechsel von der Drehstellung nach Figur 5 in die Stellung nach Figur 6 und zurück erfolgt in der zuvor beschriebenen Weise.

Da die Druckkraft des Druckfluids nur einseitig auf die Stirnfläche 14' des Kükens 11 einwirkt, entsteht eine axiale Verschiebekraft, die mittels einer schematisch dargestellten Axiallageranordnung 25 auf den Seitendeckel 3'' abgetragen wird.

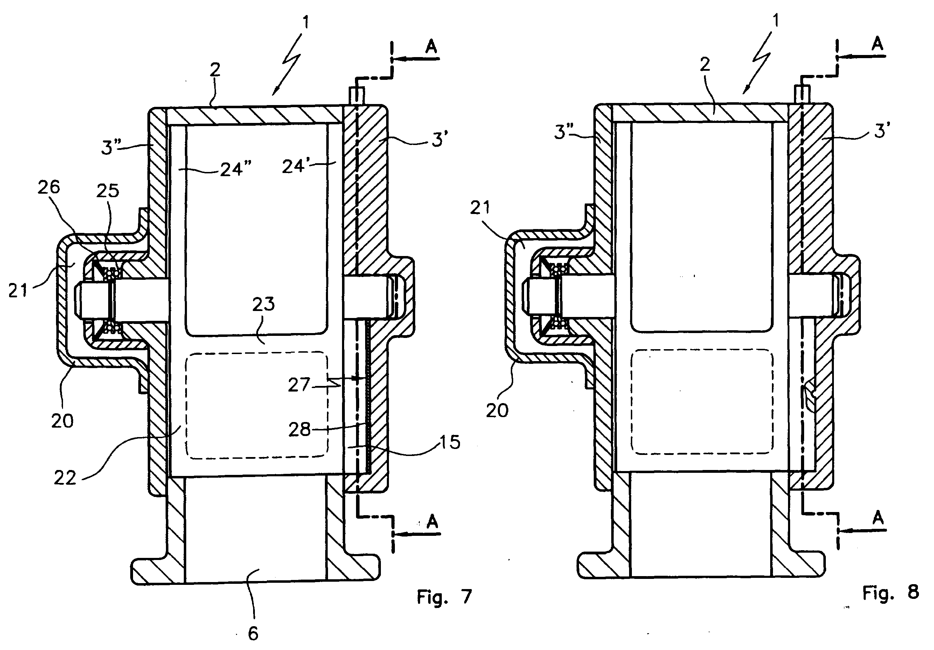

Bei der Ausführung nach Fig. 7 wird die auf die äußere Stirnfläche der Seitenscheibe 24' wirkenden Druckkraft zur Endlagenfixierung des Kükens 11 genutzt, so daß der Drehkolben 15 bei Erreichen der Endstellungen zur Vermeidung ungewollten Verdrehens nicht mehr mit dem Druckfluid beaufschlagt werden muß. Der aufgrund der komlexen Geometrie nicht unerhebliche Aufwand zur Abdichtung des Drehkolbens 15 und die Leckage des Druckfluids werden hierdurch verringert.

Die Druckkraft bewirkt eine axiale Verschiebekraft des Kükens 11 in Richtung der Haube 20. Diese wird mittels einer schematisch dargestellten Axiallageranordnung 25 auf den Seitendeckel 3'' abgetragen. Eine zwischen Seitendeckel 3'' und Axiallageranordnung 25 befindliche Tellerfeder 26 ermöglicht eine definierte axiale Verschiebung des Kükens 11 und des drehfest mit diesem verbundenen Drehkolbens 15, der sich dabei von einer Anlagefläche 27 im Gehäuse 1 in Form eines Reibbelags 28 auf der Innenseite des gegenüberliegenden Seitendeckels 3' abhebt. Das Küken 11 kann in diesem Fall die gewünschte Drehbewegung ausführen. Bei Erreichen der jeweiligen Endstellung wird der Fluiddruck reduziert, so daß der Drehkolben 15 zur drehfesten Fixierung des Kükens 11 von der Tellerfeder 26 kraftschlüssig an den Reibbelag 28 gepreßt wird. Bei der axialen Verschiebung des Drehkolbens tritt zwischen seiner äußeren Stirnfläche und dem Seitendeckel 3' eine geringfügige Leckageströmung auf, die aber auf die Funktion des Antriebs keine nachteiligen Auswirkungen hat und gegebenenfalls durch eine federnd gelagerte Dichtleiste verhindert werden kann.

Selbstverständlich muß die Seitenscheibe 24'' einen über den axialen Verschiebeweg des Kükens 11 hinausgehenden Abstand zum Seitendeckel 3'' aufweisen.

Bei der Ausführung nach Fig. 8 ist eine formschlüssige Fixierung des Kükens 11 in seinen jeweiligen Funktionsstellungen vorgesehen. Der dem Drehkolben 15 zugeordnete Seitendeckel 3' ist mit einer in die Gehäuseausnehmung 10 ragenden Rastnase 29 versehen, die zur Fixierung der Funktionsstellungen in entsprechende Vertiefungen 30 im Drehkolben 15 verrastbar ist. Beim Verstellen wird die Verrasterung durch die axiale Verschiebung des Küken 11 gelöst, so daß sich das Küken 11 frei bewegen kann.

### Bezugszeichenliste

- 1: Gehäuse
- 2: Grundkörper
- 3: Seitendeckel
- 4: Eingangsanschluß
- 5, 6: Abgangsanschluß
- 7, 8, 9: Flansch
- 10: Gehäuseausnehmung
- 11: Küken
- 12: Achse
- 13: Durchgangskanal
- 14: Stirnfläche
- 15: Drehkolben
- 16: Wirkfläche
- 17: Steg
- 18: Zuführöffnung
- 19: Druckraum
- 20: Haube
- 21: Kammer
- 22: Zylinderabschnitt
- 23: Leitfläche
- 24: Seitenscheibe
- 25: Axiallageranordnung
- 26: Tellerfeder
- 27: Anlagefläche
- 28: Reibbelag
- 29: Rastnase
- 30: Vertiefung

## Patentansprüche

1. Schüttgutweiche, umfassend ein Gehäuse (1) mit einem Eingangsanschluß (4) und mindestens zwei Abgangsanschlüssen (5), (6), die mittels eines in einer Gehäuseausnehmung (10) drehbar angeordneten Kükens (11) wahlweise mit dem Eingangsanschluß (4) verbindbar sind, wobei die zur Drehung des Kükens benötigte Antriebskraft durch Wirkung eines Druckfluids auf einen Kolben herbeiführbar ist, dadurch gekennzeichnet, daß der Kolben als innerhalb der Gehäuseausnehmung (10) angeordneter Drehkolben (15) ausgebildet ist.

2. Schüttgutweiche nach Anspruch 1, dadurch gekennzeichnet, daß der Drehkolben (15) auf der Stirnfläche (14) des Kükens (11) angeordnet ist.

3. Schüttgutweiche nach Anspruch 2, dadurch gekennzeichnet, daß auf jeder Stirnfläche (14) des Kükens (11) ein Drehkolben (15) angeordnet ist.

4. Schüttgutweiche nach einem der vorhergehenden Ansprüche , dadurch gekennzeichnet, daß Drehkolben (15) und Küken (11) einstückig ausgeführt sind.

5. Schüttgutweiche nach einem der vorhergehenden Ansprüche, dadurch gekennzeichnet, daß den Wirkflächen (16) der Drehkolben (15) korrespondierende, drehfeste Stege (17) zugeordnet sind.

6. Schüttgutweiche nach Anspruch 5, dadurch gekennzeichnet, daß die Stege (17) einstückig mit den Seitendeckeln (3) des Gehäuses (1) verbunden sind.

7. Schüttgutweiche nach einem der vorhergehenden Ansprüche, dadurch gekennzeichnet, daß das aus den Druckräumen (19) entweichende Druckfluid zum Spülen der Spalte zwischen Gehäuse (1) und Küken (11) verwendbar ist.

8. Schüttgutweiche nach einem der vorhergehenden Ansprüche, dadurch gekennzeichnet, daß das Küken (11) unter der Wirkung des Druckfluid axial verschiebbar und von einer Einrichtung zur drehfesten Fixierung des Kükens abhebbar ist.

9. Schüttgutweiche nach Anspruch 8, dadurch gekennzeichnet, daß die Einrichtung zur drehfesten Fixierung des Kükens (11) eine Anlagefläche im Gehäuse (1) umfaßt, an welche das Küken zur Fixierung kraftschlüssig anpreßbar ist.

10. Schüttgutweiche nach Anspruch 8 oder 9, dadurch gekennzeichnet, daß die Einrichtung zur drehfesten Fixierung des Kükens (11) eine formschlüssig verbindbare Verrasterung zwischen Küken und Gehäuse (1) umfaßt.
